# EUROPÄISCHE PATENTSCHRIFT

(11) **EP 2 820 654 B1**
(45) Veröffentlichungstag und Bekanntmachung des Hinweises auf die Patenterteilung: **07.09.2016**
(21) Anmeldenummer: 13710803.1
(22) Anmeldetag: 28.02.2013
(51) Int. Cl.: G21C 19/26, G21F 5/008, G21F 5/12, F26B 21/00, G21C 19/32, F26B 21/04, F26B 25/22, F26B 25/06

(54) **VERFAHREN UND VORRICHTUNG ZUR LAGERUNG VON BEHÄLTERN, IN DENEN JEWEILS EIN BRENNSTAB ODER BRENNSTABABSCHNITT GEKAPSELT IST.**
METHOD AND DEVICE FOR STORAGE OF RECEPTACLES, IN WHICH A FUEL ROD OR A FUEL ROD SECTION IS ENCAPSULATED
PROCÉDÉ ET DISPOSITIF DE STOCKAGE DE RÉCIPIENTS, DANS LESQUELS UN CRAYON DE COMBUSTIBLE OU UN SEGMENT DE CRAYON DE COMBUSTIBLE EST BLINDÉ

(30) Priorität: 02.03.2012 DE 102012203347; 20.06.2012 DE 102012210409; 10.07.2012 DE 102012212006
(43) Veröffentlichungstag der Anmeldung: 07.01.2015
(60) Teilanmeldung: 16155068.6
(73) Patentinhaber: AREVA GmbH, 91052 Erlangen (DE)
(72) Erfinder: HUMMEL, Wolfgang, 92318 Neumarkt (DE); NEUBAUER, Egon, 91301 Forchheim (DE); HÖFERS, Werner, 91056 Erlangen (DE); KURZER, Klaus, 91338 Igensdorf-Etlaswind (DE)
(74) Vertreter: Schlögl, Markus
(86) Internationale Anmeldenummer: PCT/EP2013/053989
(87) Internationale Veröffentlichungsnummer: WO 2013/127894

(56) Entgegenhaltungen:
- DE-A1- 2 854 358
- DE-A1- 3 028 884
- DE-A1- 19 640 393
- DE-B3-102010 036 373
- US-A1- 2009 158 614

## Beschreibung

Die Erfindung bezieht sich auf ein Verfahren und eine Vorrichtung zur Lagerung von Behältern, in denen jeweils ein Brennstab oder eines Brennstababschnitt gekapselt ist.

Zu Transport- und/oder Lagerzwecken werden defekte Brennstäbe oder Brennstababschnitte vakuum- und fluiddicht in Behälter oder Kapseln eingebracht, wie sie beispielsweise aus der DE 196 40 393 B4, der EP 1 248 270 A1, der EP 1 600 982 B1 und der WO 2010/084122 A1 bekannt sind. Da die Kapselung eines Brennstabes oder eines Brennstababschnittes möglichst nahe am Ort der ursprünglichen Lagerung, d.h. innerhalb des Brennelementlagerbeckens unter Wasser erfolgt, ist es unvermeidlich, dass beim Einbringen des Brennstabes oder Brennstababschnittes in den geöffneten Behälter Wasser in diesen eindringt. Dieses Wasser muss jedoch aus dem Brennstabbehälter entfernt werden, da es aufgrund der Nachzerfallswärme verdampfen und zu einem unzulässig hohen Innendruck führen würde. Aus diesem Grund weisen die für die aus der DE 196 40 393 B4, der EP 1 248 270 A1, der EP 1 600 982 B1 bekannten Behälter verwendeten Verschlusselemente einen Kanal auf, über den Gas eingeblasen werden kann, so dass das im Behälter befindliche Wasser ausgetrieben wird. Bei den aus der DE 196 40 393 B4 und der EP 1 248 270 A1 jeweils bekannten Verschlussstopfen ist in jedem Verschlussstopfen ein koaxialer Kanal vorgesehen, in dem ein federbelastetes Ventil angeordnet ist, das mit einem Schließelement den Kanal fluiddicht verschließt. Zum Austreiben des Wassers werden diese Schließelemente mit Hilfe eines Stößels von ihrem Ventilsitz abgehoben und es wird über einen dann offenen Kanal ein Gas eingeblasen und das Wasser über den ebenfalls offenen Kanal des gegenüber liegenden Verschlusselementes ausgetrieben. Bei beiden bekannten Behältern erfolgt dieses Austreiben des Wassers, wenn sich die Verschlusselemente durch Verschrauben, Verschweißen oder Verformen in ihrer Endmontageposition befinden, in der sie den Behälter fluiddicht verschließen.

Bei dem aus der EP 1 600 982 B1 bekannten Behälter ist ein auf ein Außengewinde des Behälters aufschraubbares Verschlusselement vorgesehen, in dem ein Dichtelement axial verschiebbar gelagert ist. In einer Zwischenposition des Verschlusselementes, in der dieses noch nicht festgezogen ist, liegt zwischen der Dichtfläche des Dichtelementes und der mit ihr als Dichtpaarung zusammenwirkenden Stirnfläche des hohlzylindrischen Behälterteils eine Trennfuge vor, die mit einer seitlichen Belüftungsöffnung im Verschlusselement kommuniziert und in dieser Zwischenposition den Außenraum mit dem Spülraum des hohlzylindrischen Behälterteils fluidisch verbindet.

Bei dem aus der WO 2010/084122 A1 bekannten Behälter ist als Verschlusselement eine Kappe vorgesehen, die auf ein hohlzylindrisches Behälterteil aufgeschoben und mit dessen Stirnfläche stoffschlüssig verbunden wird. Das Verschließen des Behälters erfolgt in einer fluiddichten Kammer. Vor dem Verschließen, d.h. bei nicht auf den hohlzylindrischen Behälterteil aufgesetzter Kappe wird die in der Kammer befindliche Flüssigkeit abgezogen und anschließend eine Vakuumtrocknung durchgeführt. Aufgrund der innerhalb des mit einem Brennstab bestückten Behälters zwischen Brennstab und Innenwand des Behälters vorliegenden engen Spalte, kann unter Umständen Restwasser im Behälter verbleiben.

Bei der Kapselung von Brennstäben oder Brennstababschnitten für eine längerfristige Zwischenlagerung stellt der Verbleib an Restwasser im Behälter ein erhebliches Problem dar. Dieses darf eine vorgegebene Menge, in der Regel 1g, nicht überschreiten. Mit den bekannten Verfahren ist es aber nicht möglich, eine quantitative Aussage über den in der Brennstabkapsel auch nach Vakuumtrocknung insgesamt verbleibenden Gehalt an Restwasser zu treffen.

Aus der Patentschrift US 2009 /0158614 A1 ist ein weiteres Verfahren und eine Vorrichtung zur Kapselung und zur Trocknung von Kernbrennstäben bekannt.

Der Erfindung liegen die Aufgaben zugrunde, ein Verfahren und eine Vorrichtung zur Behandlung und Lagerung einer Mehrzahl von Behältern anzugeben, in denen ein Brennstab oder ein Brennstababschnitt eingeschlossen ist.
Die genannten Aufgaben werden jeweils gelöst mit den Merkmalen der nebengeordneten Patentansprüche 1 und 3. Vorteilhafte Ausgestaltungen sind in den diesen nebengeordneten Patentansprüchen jeweils nachgeordneten Unteransprüchen angegeben.
Die Kapselung eines Brennstabes oder Brennstababschnittes in einem Behälter in einem möglichen, nicht erfindungsgemäßen Verfahren umfasst folgende Verfahrensschritte:
a) Einbringen des Brennstabes oder Brennstababschnittes in den Behälter,
b) Anschließen eines der Enden des Behälters an eine Spülgasleitung,
c) Entwässern und Spülen des Behälters mit Spülgas,
d) Anschließen der Enden des Behälters an eine Bypassleitung derart, dass ein geschlossener Gaskreislauf entsteht und Zirkulieren eines Heizgases in diesem Gaskreislauf bis der absolute Feuchtegehalt einen Endwert erreicht, bei dem er nicht mehr ansteigt,
e) Trennen des Behälters vom Gaskreislauf,
f) anschließendes fluiddichtes Verschließen des Behälters an beiden Enden.

Vorzugsweise wird der Behälter vor dem Verschließen erneut mit Spülgas gespült.

Wenn außerdem die Verfahrensschritte c) und d) nacheinander mehrfach zyklisch durchgeführt werden, wobei bei jedem Zyklus der Verfahrensschritt c) und anschließend der Verfahrensschritt d) durchgeführt werden, können besonders niedrige Grenzwerte für den Feuchtegehalt sicher erreicht werden.

Bei dem erfindungsgemäßen Verfahren zur Lagerung von Behältern in denen jeweils ein Brennstab oder Brennstababschnitt gekapselt ist, werden gemäß Patentanspruch 1 folgende Verfahrensschritte durchgeführt
a) Einbringen der Behälter in einen eine Mehrzahl von gitterförmigen Abstandhaltern aufweisenden, an einer Oberseite offenen Kapselköcher,
b) fluiddichtes Verschließen des Kapselköchers mit einer Haube,
c) Aufsetzen eines mit einer in das Innere des Kapselköchers regenden und mit einer durch die Haube geführte Absaugleitung fluidisch verbundenen Sauglanze versehenen Deckels auf den Kapselköcher
d) Absaugen des im Kapselköcher befindlichen Wassers mit der Sauglanze,
e) Spülen des Kapselköchers mit Spülgas,
f) Spülen des Kapselköchers mit einem Heizgas bis der absolute Feuchtegehalt einen vorgegebenen Grenzwert erreicht,
g) Verschweißen des Deckels mit dem Kapselköcher und Verschweißen einer im Deckel befindlichen und zur Sauglanze führenden Öffnung mit einer in der Haube gelagerten Schweißvorrichtung.

Vorzugsweise werden auch bei diesem Verfahren die Verfahrensschritte e) und f) nacheinander mehrfach zyklisch durchgeführt, wobei bei jedem Zyklus der Verfahrensschritt e) und anschließend der Verfahrensschritt f) durchgeführt werden.

Eine Vorrichtung zur Kapselung eines Brennstabes oder Brennstababschnittes in einem Behälter umfasst folgende Merkmale:
a) die Vorrichtung weist eine erste und eine zweite Kammer auf,
b) erste und eine zweite Kammer sind voneinander beabstandet und auf einer gemeinsamen Systemachse angeordnet,
c) erste und zweite Kammer sind mit einer ersten bzw. zweiten Öffnung zum Aufnehmen eines in die Kammer mündenden Freiendes des Behälters derart versehen, dass erste und zweite Kammer bei zwischen diesen angeordnetem Behälter ausschließlich über diesen selbst fluidisch miteinander verbunden werden können,
d) die erste Kammer ist an eine Einlassleitung und die zweite Kammer an eine Auslassleitung für ein Spülgas angeschlossen,
e) Einlassleitung und Auslassleitung sind über eine außerhalb der Kammern verlaufende Bypassleitung derart miteinander verbindbar, dass ein geschlossener Gaskreislauf entsteht, wobei im Gaskreislauf eine Pumpe und eine Heizeinrichtung zum Umwälzen bzw. Heizen eines im Gaskreislauf befindlichen Heizgases angeordnet sind,
f) im Gaskreislauf sind Messeinrichtungen zum Erfassen des absoluten Feuchtegehaltes des aus der zweiten Kammer in die Bypassleitung strömenden Heizgases angeordnet,
g) jede Kammer weist Mittel zum Verschließen des Behälters auf.

Vorzugsweise sind erste und zweite Kammer entlang der Systemachse miteinander starr über ein Verbindungsrohr verbunden, in das der Behälter derart einführbar ist, dass er mit seinen Freienden über das Verbindungsrohr hinausragt.

Insbesondere ist zwischen Behälter und Verbindungsrohr zumindest ein Dichtelement angeordnet, das derart einstellbar ist, dass die Kammern ausschließlich über den Behälter fluidisch miteinander verbunden sind.

Wenn an beiden Enden des Verbindungsrohres ein einstellbares Dichtelement angeordnet ist, wird zwischen Behälter und Verbindungsrohr ein zylindrischer Spaltraum gebildet, der gegenüber den Kammern fluiddicht abgeschlossen ist.

Gemäß der Erfindung umfasst eine Vorrichtung zur fluiddichten Lagerung einer Mehrzahl von Behältern, in denen jeweils ein Brennstab oder Brennstababschnitt gekapselt ist, folgende Merkmale:
a) einen eine Mehrzahl von gitterförmigen Abstandhaltern aufweisenden Kapselköcher,
b) eine Haube zum fluiddichten Verschließen des im Gestell eingebrachten Kapselköchers,
c) eine durch die Haube und durch eine in einem in der Haube verschiebbar gelagerten Deckel hindurchgeführte Sauglanze zum Absaugen von im Kapselköcher (222) befindlichen Wasser,
d) die Haube weist einen Einlass und einen Auslass für ein Spülgas und ein Heizgas auf,
e) an den Auslass ist eine Messeinrichtung zum Messen des absoluten Feuchtegehaltes des aus dem Behälter austretenden Heizgases angeordnet,
f) in der Haube sind Mittel zum Aufsetzen und Verschweißen des Deckels auf den bzw. mit dem Kapselköcher angeordnet.

Zur weiteren Erläuterung der Erfindung wird auf die in den Figuren dargestellten Ausführungsbeispiele verwiesen. Es zeigen:
Fig. 1 eine nicht erfindungsgemäße Vorrichtung zur Kapselung eines Brennstabes oder Brennstabschnittes in einer schematischen Prinzipdarstellung,
Fig. 2 ein Diagramm, in dem der Feuchtegehalt eines aus dem Behälter oder eines Kapselköchers ausströmenden Heizgases gegen die Zeit aufgetragen ist,
Fig. 3 - 7 eine Vorrichtung gemäß der vorliegenden Erfindung zur fluiddichten Lagerung einer Mehrzahl von Behältern, in denen jeweils ein Brennstab oder Brennstababschnitt gekapselt ist, bei der Durchführung zeitlich aufeinanderfolgender Arbeitsschritte.

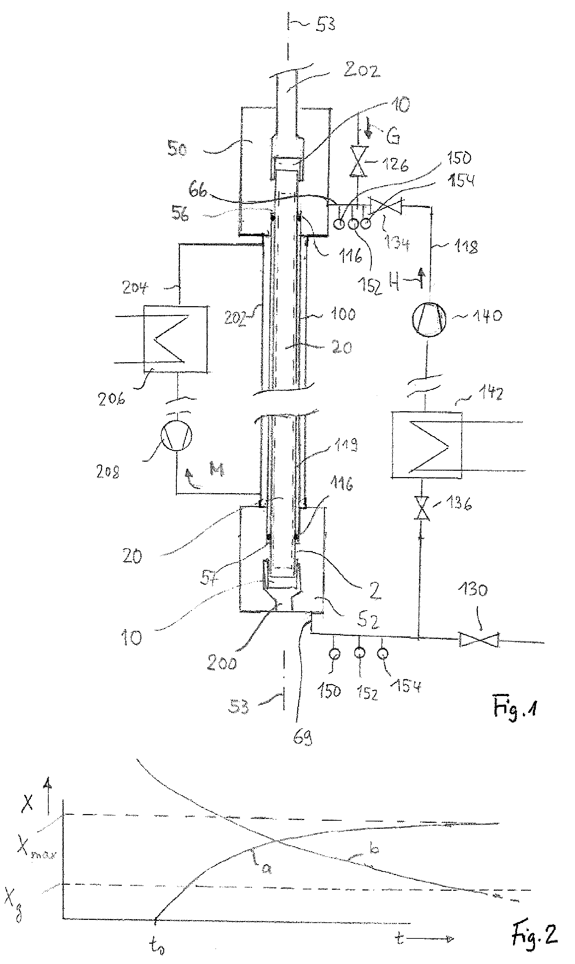

Gemäß Fig. 1 ist ein mit einem Brennstab 20 versehener Behälter 2 in eine Vorrichtung eingebracht worden, in der das im Behälter 2 befindliche Restwasser aus dem Behälter 2 entfernt wird und in der er nach der Verringerung des Restwassergehaltes auf einen bzw. unterhalb eines vorgegebenen maximal zulässigen Grenzwertes gasdicht verschlossen wird. In einem vorhergehenden Arbeitsschritt ist der in der Figur gestrichelt eingezeichnete Brennstab 20 in den Behälter 2 eingebracht worden, auf dessen Enden ein beispielsweise aus der EP 1 600 982 B1 bekanntes Verschlusselement 10 in einer Zwischenposition aufgeschraubt ist.

Die Vorrichtung umfasst eine erste und eine zweite Kammer 50, 52, die voneinander beabstandet auf einer gemeinsamen Systemachse 53 angeordnet sind. Die erste und zweite Kammer 50, 52 sind entlang dieser Systemachse 53 über ein an beiden Enden offenes Verbindungsrohr 100 miteinander starr verbunden. Die Enden des Verbindungsrohres 100 bilden in der ersten und zweiten Kammer 50, 52 eine erste bzw. zweite Öffnung 56, 57 durch die ein in das Verbindungsrohr 100 eingeführter Behälter 2 mit seinen Freienden über das Verbindungsrohr 100 hinaus in die Kammern 50, 52 hineinragt. Zwischen dem Verbindungsrohr 100 und dem Behälter 2 sind im Bereich dieser Freienden zustellbare Dichtelemente 116 angeordnet, die den zwischen Verbindungsrohr 100 und Behälter 2 vorhandenen zylindrischen Spaltraum 119 verschließen, so dass erste und zweite Kammer 50, 52 bei zwischen diesem angeordnetem Behälter 2 ausschließlich über diesen selbst fluidisch miteinander verbunden werden können.

Der mit dem Verschlusselement 10 versehene Behälter 2 ist in der zweiten Kammer 52 in einer an das Verschlusselement 10 angepassten Aufnahme 200 drehfixiert gelagert. In die erste Kammer 50 ist ein Handhabungswerkzeug 202 eingeführt, das das Verschlusselement 10 drehmomentschlüssig umgreift und mit dem die beiden Verschlusselemente 10 mit dem Behälter 2 in eine gasdichte Endposition verschraubt werden können.

An die erste Kammer 50 ist eine Einlassleitung 66 für ein Spülgas G angeschlossen, das durch den Behälter 2 in die zweite Kammer 52 strömt und diese über eine Auslassleitung 69 verlässt. Einlassleitung 66 und Auslassleitung 69 sind über Ventile 134 und 136 an eine außerhalb der Kammern 50,52 verlaufende Bypassleitung 118 angeschlossen, so dass durch Schließen von in der Einlassleitung 66 bzw. Auslassleitung 69 für das Spülgas G befindliche Ventile 126 bzw. 130 ein geschlossener Gaskreislauf entsteht, dessen Volumen das freie Volumen des Behälters 2 um Größenordnungen überschreitet und ein Vielfaches, mehr als ein 10-faches, im Ausführungsbeispiel etwa das 50-fache dieses Volumens beträgt. In diesem Gaskreislauf sind eine Pumpe 140 und eine Heizeinrichtung 142 zum Umwälzen bzw. Heizen eines im Gaskreislauf befindlichen Heizgases H angeordnet. Darüber hinaus sind im Gaskreislauf Messeinrichtungen 150, 152 und 154 angeordnet, mit denen die Temperatur, die relative Feuchte bzw. der Druck des in die erste Kammer 50 einströmenden und des aus der zweiten Kammer 52 ausströmenden Heizgases H gemessen werden können.

Das Verbindungsrohr 100 ist außerdem von einem zwischen den Kammern 50, 52 angeordneten Außenrohr 202 umgeben, das an einen Heizkreislauf 204 angeschlossen ist, in dem ebenfalls ein mit einer Heizeinrichtung 206 beheiztes fluides Medium M mit einer Pumpe 208 umgewälzt wird, so dass das Verbindungsrohr 100 thermisch von der Umgebung isoliert wird. Alternativ hierzu kann eine solche thermische Isolation auch durch Einbringen von wärmedämmenden Material oder Heizelementen zwischen Verbindungsrohr 100 und Außenrohr 202 erzielt werden.

Zunächst werden die zustellbaren Dichtelemente 116 geöffnet und durch Einblasen von Spülgas G werden die Bearbeitungskammern 50,52 und der Spaltraum 119 über die Auslassleitung 69 entwässert. Danach wird der Spaltraum 119 mit den Dichtelementen 116 verschlossen und das im Behälter 2 zwischen Brennstab 20 und Innenwand des Behälters 2 befindliche Wasser wird mit Hilfe des Spülgases G ausgetrieben. Danach werden die Ventile 126, 130 geschlossen und die in der Bypassleitung 118 befindlichen Ventile 134 und 136 geöffnet. Anschließend wird das in der Bypassleitung 118 befindliche Heizgas H kontinuierlich in diesem geschlossenen Gaskreislauf umgewälzt. Mit Hilfe der in der Nähe der ersten und zweiten Kammer 50, 52 in der Einlassleitung 66 und der Auslassleitung 69 jeweils angeordneten Messeinrichtungen 150, 152 und 154 werden die Temperatur, der Feuchtegehalt und der Druck des im Gaskreislauf strömenden Heizgases H erfasst. Mit den in der Auslassleitung 69 gemessenen Werten für Druck, Temperatur und relativen Feuchtegehalt kann der im Heizgas H enthaltene absolute Wasser- bzw. Feuchtegehalt in kg/m³ bestimmt werden und dessen zeitliche Entwicklung aufgenommen werden.

Im Diagramm gemäß Fig. 2 ist dieser absolute Feuchtegehalt X in Kurve a gegen die Zeit t aufgetragen. Der Figur ist zu entnehmen, dass der absolute Feuchtegehalt X ab dem Zeitpunkt t₀, ab dem das Heizgas im Gaskreislauf umgewälzt wird, stetig ansteigt, bis er in einem Plateau einen konstanten Endwert Xₘₐₓ erreicht. Das Erreichen dieses Endwertes Xₘₐₓ zeigt an, dass das innerhalb des geschlossenen Gaskreislaufes befindliche Wasser vollständig verdampft ist. Für den Fall, dass sich im Behälter 2 ein geöffneter Brennstab oder offene Brennstababschnitte befinden, ist außerdem sichergestellt, dass auch das im Kernbrennstoff gebundene Wasser vollständig verdampft ist. Aus diesem Endwert Xₘₐₓ kann nun bei bekanntem freien Volumen des Behälters 2 und des Brennstabs 20 die absolute Masse des innerhalb des Behälters 2 befindlichen Wasserdampfes in Gramm ermittelt werden. Nach Erreichen des Endwertes Xₘₐₓ werden die Ventile 134 und 136 geschlossen. Damit ist die Menge des innerhalb des Behälters 2 noch befindlichen Wassers bekannt. Grundsätzlich könnte der Behälter 2 anschließend gasdicht verschlossen werden. Vorzugsweise werden jedoch erneut die Ventile 126 und 130 geöffnet und es wird der Behälter 2 erneut mit Spülgas G gespült. Auf diese Weise wird der im Behälter 2 und in den Brennstabplena befindliche Wasserdampf ausgetrieben, so dass die Menge des innerhalb des Behälters 2 befindlichen Wassers zusätzlich reduziert wird. Dementsprechend kann die vorher ermittelte Restmenge als ein oberer Wert angesehen werden, der größer ist als die tatsächliche Restmenge.

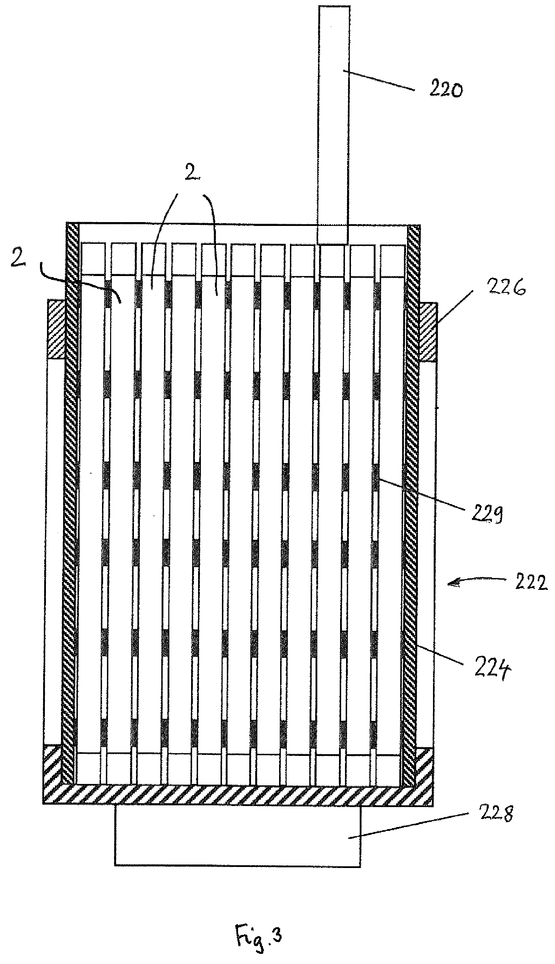

Der Behälter 2 kann dann mit den Verschlusselementen 10 verschweißt oder einer nachfolgend erläuterten weiteren Behandlung unterzogen werden. Bei dieser nachfolgenden Behandlung wird der Behälter 2 aus der Vorrichtung entnommen und mit Hilfe eines Handhabungswerkzeuges 220 in einen Kapselköcher 222 verbracht, der in Fig. 3 dargestellt ist und aus einem zylindrischen Aufnahmerohr 224 aufgebaut ist, das in einem Rahmen 226 angeordnet ist, der ein Fußteil 228 aufweist. Dieser Kapselköcher 222 ist zur Aufnahme einer Mehrzahl von Behältern 2 vorgesehen. Hierzu sind im Kapselköcher 222 eine Mehrzahl von axial beabstandeten gitterförmigen Abstandhaltern 229 angeordnet, in deren Zellen die Behälter 2 geführt sind.

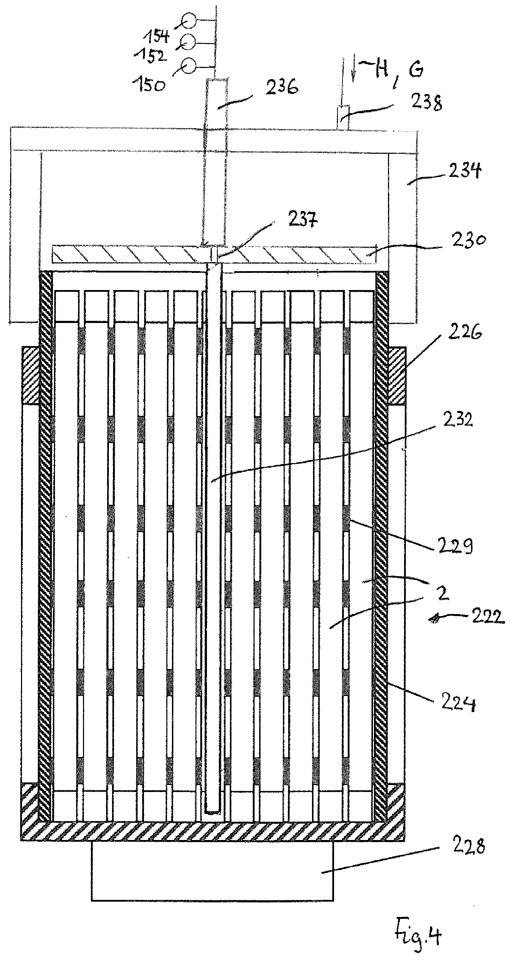

Gemäß Fig. 4 wird nach dem Befüllen des Kapselköchers 222 mit Behältern 2 auf das Aufnahmerohr 224 ein Deckel 230 aufgesetzt, der eine zentrale Sauglanze 232 aufweist, die bis zum Boden des Kapselköchers 222 führt und zum Absaugen von im Kapselköcher 222 befindlichen Wasser dient. Auf das Aufnahmerohr 224 wird fluiddicht eine Haube 234 aufgesetzt, durch die eine Saugleitung 236 hindurchgeführt ist, die über eine im Deckel 230 befindliche Öffnung 237 mit der Sauglanze 232 fluidisch verbunden ist. Über die Saugleitung 236 wird im Kapselköcher 222 befindliches Wasser unter gleichzeitiger Zufuhr von Spülgas G über eine Einführöffnung 238 abgesaugt. Anschließend wird über die Einführöffnung 238 Heizgas H zu- und über die Absaugleitung 236 abgeführt. Anders als beim Trocknen des Behälters 2 wird das Heizgas H nicht in einem geschlossenen Kreislauf geführt.

Mit Hilfe von Messeinrichtungen 150, 152 und 154 werden Temperatur, relativer Feuchtegehalt und Druck am Ausgang erfasst, aus denen der aktuelle absolute Feuchtegehalt X ermittelt wird, der mit zunehmender Dauer des Trocknungsvorganges stetig abnimmt. Der zeitliche Verlauf des absoluten Feuchtegehaltes X ist im Diagramm der Fig. 2 in Kurve b vereinfacht dargestellt.

Das Heizgas H wird solange durch den Kapselköcher 222 geleitet, bis der absolute Feuchtegehalt X einen vorgegebenen Grenzwert X_{g} erreicht oder unterschreitet. Der zeitliche Verlauf des absoluten Feuchtegehaltes X ist im Diagramm der Fig. 2 in Kurve b dargestellt. Dadurch ist sichergestellt, dass der absolute Gehalt des im Inneren des Kapselköchers 222 befindlichen Wassers vorgegebene Maximalwerte nicht überschreitet. Auf diese Weise ist eine sichere Aussage darüber möglich, ob vorgegebene Grenzwerte eingehalten werden.

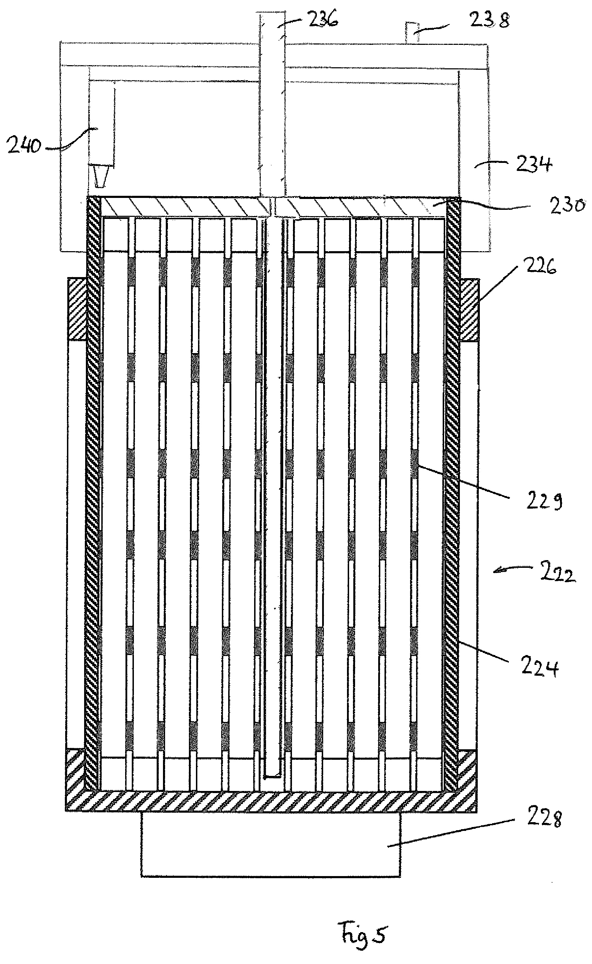

Nach Trocknen des Kapselköchers 222 wird gemäß Fig. 5 der Deckel mit dem Aufnahmerohr 224 mit einer im Inneren der Haube 234 drehbar um die Längsmittelachse des Aufnahmerohrs 224 gelagerten Schweißeinrichtung 240 verschweißt.

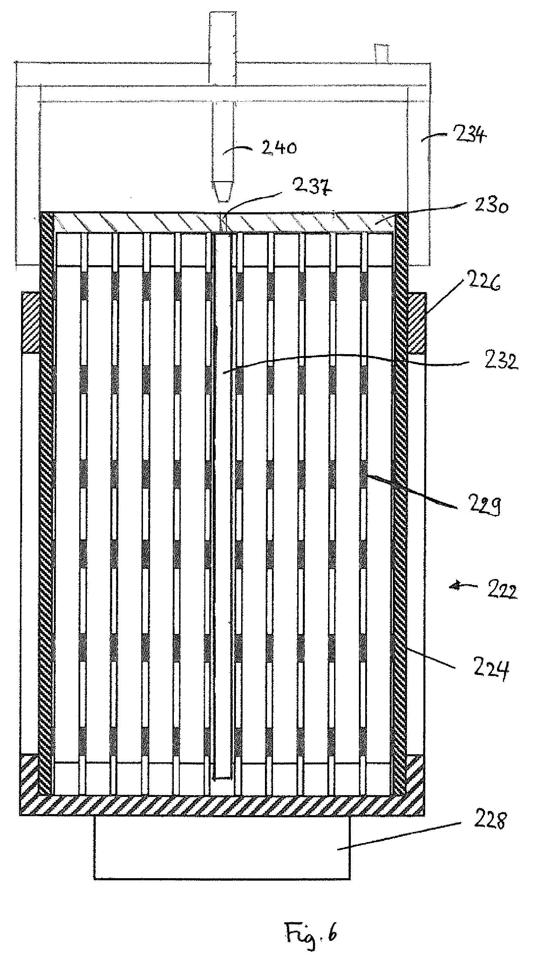

In einem nächsten Schritt wird mit der Schweißeinrichtung 240 gemäß Fig. 6 die im Deckel 230 befindliche Öffnung 237 zur Sauglanze 232 ebenfalls verschweißt. Zusätzlich können ggf. noch Ultraschallprüfeinrichtungen in der Haube 234 angeordnet sein, mit denen eine Überprüfung der Schweißnähte möglich ist.

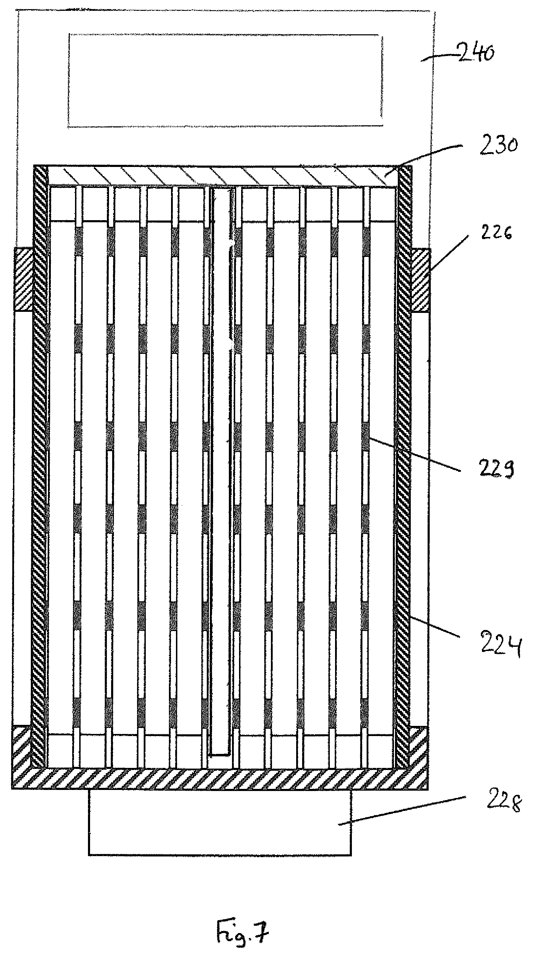

Anschließend wird gem. Fig. 7 die Haube 234 entnommen und auf den Rahmen 226 ein Transportkopf 240 aufgesetzt, mit dem der Transport des verschlossenen Kapselköchers 222 erleichtert ist.

Sowohl beim Spülen und Trocknen des Behälters 2 als auch beim Spülen und Trocknen des Kapselköchers 222 können diese beiden Verfahrensschritte mehrfach zyklisch wiederholt werden, so dass sich an ein erfolgtes Trocknen ein erneutes Spülen und danach ein erneutes Trocknen anschließen.

## Patentansprüche

1. Verfahren zur Lagerung von Behältern (2) in denen jeweils ein Brennstab (20) oder Brennstababschnitt gekapselt ist, mit folgenden Verfahrensschritten:
a) Einbringen der Behälter (2) in einen eine Mehrzahl von gitterförmigen Abstandhaltern (229) aufweisenden, an einer Oberseite offenen Kapselköcher (222),
b) fluiddichtes Verschließen des Kapselköchers (222) mit einer Haube (234),
c) Aufsetzen eines mit einer in das Innere des Kapselköchers ragenden und mit einer durch die Haube geführte Absaugleitung (236) fluidisch verbundenen Sauglanze (232) versehenen Deckels (230) auf den Kapselköcher (222)
d) Absaugen des im Kapselköcher (222) befindlichen Wassers mit der Sauglanze (223),
e) Spülen des Kapselköchers (222) mit Spülgas (G),
f) Spülen des Kapselköchers (222) mit einem Heizgas (H) bis der absolute Feuchtegehalt (X) einen vorgegebenen Grenzwert (X_{g}) erreicht,
g) Verschweißen des Deckels (230) mit dem Kapselköcher (222) und Verschweißen einer im Deckel (230) befindlichen und zur Sauglanze (232) führenden Öffnung (237) mit einer in der Haube (234) gelagerten Schweißvorrichtung (240).

2. Verfahren nach Anspruch 1, bei dem die Verfahrensschritte e) und f) nacheinander mehrfach zyklisch durchgeführt werden, wobei bei jedem Zyklus der Verfahrensschritt e) und anschließend der Verfahrensschritt f) durchgeführt werden.

3. Vorrichtung zur fluiddichten Lagerung einer Mehrzahl von Behältern (2), in denen jeweils ein Brennstab (20) oder Brennstababschnitt gekapselt ist, mit folgenden Merkmalen:
a) einen eine Mehrzahl von gitterförmigen Abstandhaltern aufweisenden Kapselköchers (222),
b) eine Haube (234) zum fluiddichten Verschließen des Kapselköchers (222),
c) die Haube (234) weist einen Einlass (66) und einen Auslass (69) für ein Spülgas (G) und ein Heizgas (H) auf,
d) an den Auslass ist eine Messeinrichtung zum Messen des absoluten Feuchtegehaltes (X) des aus dem Behälter (2) austretenden Heizgases (H) angeordnet,
**gekennzeichnet durch**
e) eine **durch** die Haube (234) und **durch** eine in einem in der Haube (234) verschiebbar gelagerten Deckel (230) hindurchgeführte Sauglanze (232) zum Absaugen von im Kapselköcher (222) befindlichen Wasser, und
f) in der Haube (234) angeordnete Mittel zum Aufsetzen und Verschweißen des Deckels (230) auf den bzw. mit dem Kapselköcher (222).

## Claims

1. Method for storing containers (2) in which a fuel rod (20) or fuel rod section is encapsulated respectively, having the following method steps:
a) introducing the containers (2) into a capsule quiver (222) which has a plurality of lattice-shaped spacers (229) and is open on an upper side,
b) fluid-tight sealing of the capsule quiver (222) with a hood (234),
c) setting a cover (230) provided with a suction lance (232) projecting into the interior of the capsule quiver (222) and connected fluidically to a suction line (236) guided through the hood,
d) sucking up the water located in the capsule quiver (222) with the suction lance (223),
e) flushing the capsule quiver (222) with purging gas (G),
f)flushing the capsule quiver (222) with a heating gas (H) until the absolute moisture content (X) reaches a predetermined limit value (X_{g}),
g) welding the cover (230) to the capsule quiver (222) and welding an opening (237) located in the cover (230) and leading to the suction lance (232) with a welding device (240) stored in the hood (234).

2. Method according to claim 1, in which method steps e) and f) are carried out cyclically multiple times one after the other, wherein, for each cycle, method step e) is carried out and then method step f) is carried out.

3. Device for fluid-tight storage of a plurality of containers (2) in which a fuel rod (20) or fuel rod section is encapsulated respectively, having the following features:
a) a capsule quiver (222) having a plurality of lattice-shaped spacers,
b) a hood (234) for fluid-tight sealing of the capsule quiver (222),
c) the hood (234) has an inlet (66) and an outlet (69) for a purging gas (G) and a heating gas (H),
d) a measuring device for measuring the absolute moisture content (X) of the heating gas (H) exiting from the container (2) is arranged on the outlet **characterised by**
e) a suction lance (232) to suck up water located in the capsule quiver (222), guided through the hood (234) and through a cover (230) mounted displaceably in the hood (234), and
f)means arranged in the hood (234) to set and weld the lid (230) on or to the capsule quiver (222).

## Revendications

1. Procédé de stockage de conteneurs (2) dans lesquels un crayon de combustible (20) ou un segment de crayon de combustible est encapsulé, comprenant les étapes de procédé suivantes :
a) introduction des conteneurs (2) dans un caisson d'encapsulation (222) ouvert sur un côté supérieur et présentant une multiplicité d'écarteurs en forme de grille (229),
b) fermeture étanche au fluide du caisson d'encapsulation (222) avec une hotte (234),
c) pose sur le caisson d'encapsulation (222) d'un couvercle (230) pénétrant à l'intérieur du caisson d'encapsulation (222) et muni d'une lance d'aspiration (232) fluidiquement reliée à une conduite d'aspiration (236) menée à travers la hotte,
d) aspiration de l'eau se trouvant dans le caisson d'encapsulation (222) avec la lance d'aspiration (232),
e) balayage du caisson d'encapsulation (222) avec un gaz de balayage (G),
f) balayage du caisson d'encapsulation (222) avec un gaz de chauffage (H) jusqu'à ce que la teneur en humidité absolue (X) atteigne une valeur limite prédéterminée (X_{g}),
g) soudage du couvercle (230) avec le caisson d'encapsulation (222) et soudage d'une ouverture (237) se trouvant dans le couvercle (230) et conduisant à la lance d'aspiration (232) avec un dispositif de soudage (240) placé dans la hotte (234).

2. Procédé selon la revendication 1, dans lequel les étapes de procédé e) et f) sont exécutées plusieurs fois l'une après l'autre de façon cyclique, dans lequel à chaque cycle on exécute d'abord l'étape de procédé e) et ensuite l'étape de procédé f).

3. Dispositif de stockage étanche au fluide d'une multiplicité de conteneurs (2), dans lesquels un crayon de combustible (20) ou un segment de crayon de combustible est chaque fois encapsulé, présentant les caractéristiques suivantes :
a) un caisson d'encapsulation (222) présentant une multiplicité d'écarteurs en forme de grille,
b) une hotte (234) pour la fermeture étanche au fluide du caisson d'encapsulation (222),
c) la hotte (234) présente une entrée (66) et une sortie (69) pour un gaz de balayage (G) et un gaz de chauffage (H),
d) un dispositif de mesure est agencé à la sortie pour mesurer la teneur en humidité absolue (X) du gaz de chauffage (H) sortant du conteneur (2),
**caractérisé par**
e) une lance d'aspiration (232) menée à travers la hotte (234) et à travers un couvercle (230) monté de façon déplaçable dans la hotte (234) pour aspirer l'eau se trouvant dans le caisson d'encapsulation (222), et
f) des moyens agencés dans la hotte (234) pour poser et souder le couvercle (230) sur ou avec le caisson d'encapsulation (222).
